# EUROPEAN PATENT APPLICATION

(11) **EP 4 841 342 A1**
(43) Date of publication of application: **18.11.2026**
(21) Application number: 25744684.9
(22) Date of filing: 23.01.2025
(51) Int. Cl.: G03B 11/04

(54) **DOME CAMERA**

(30) Priority: 26.01.2024 CN 202410112017
(71) Applicant: Hangzhou Hikvision Digital Technology Co., Ltd., Hangzhou, Zhejiang 310051 (CN)
(72) Inventor: LEI, Chengcai, Hangzhou, Zhejiang 310051 (CN); YU, Gang, Hangzhou, Zhejiang 310051 (CN); YAN, Caisheng, Hangzhou, Zhejiang 310051 (CN); XU, Zhongwen, Hangzhou, Zhejiang 310051 (CN)
(74) Representative: Epping - Hermann - Fischer
(86) International application number: PCT/CN2025/074314
(87) International publication number: WO 2025/157221

(57) **Abstract**

A spherical camera, comprising a housing (10); a spherical transparent cover (20); a horizontal rotating support (30), which can horizontally rotate, relative to the spherical transparent cover (20), around a first central axis (LP); and a lens assembly (40), which is rotatably mounted on the horizontal rotating support (30) around a second central axis (LT) extending in a horizontal direction, so as to tilt-adjust the direction of a second optical axis (LR). The lens assembly (40) comprises: a lens housing (41), which extends axially in a direction of the second optical axis (LR); a lens (42), which is mounted inside the lens housing (41) and a front end of which is exposed to a lens hole in a front end of the lens housing (41); a supplementary light (43), which is mounted on the lens housing (41), wherein an emitted light of the supplementary light (43) is used for illuminating an image area of the lens (42); and a light shielding assembly (44), which is mounted on the lens housing (41) and is located between the lens (42) and the supplementary light (43) in a radial direction of the lens housing (41), wherein the light shielding assembly (44) comprises a driving component (441), which is configured to output a driving force for changing a gap between the front end of the light shielding assembly (44) and the spherical transparent cover (20) in the direction of the second optical axis.

## Description

The present application claims the priority to Chinese patent application No. 202410112017.X filed with the China National Intellectual Property Administration (CNIPA) on January 26, 2024 and entitled "SPHERICAL CAMERA", which is incorporated herein by reference in its entirety.

### Technical Field

The present application relates to the field of camera devices, and in particular to a spherical camera.

### Background

Currently, some spherical products on the market are provided with an external electric rotation mechanism to achieve camera shooting angle adjustment. This technical solution has high on-site installation costs, and affects the overall appearance of the camera.

Some spherical products currently on the market can achieve multi-directional adjustment, but lack a supplementary light, resulting in degraded image quality. Some products are designed with a supplementary light, but in order to avoid the influence of reflection of the supplementary light on a transparent cover on image quality, a costly transparent cover is used. Moreover, horizontal rotation can be forcibly turned by hand, which lacks safety. Neither of two technical solutions can perfectly meet the user's demands for image quality and angle adjustment of spherical products.

### Summary

One embodiment of the present application provides a spherical camera, including:
a housing defining a first central axis extending in a vertical direction;
a spherical transparent cover fixed to the housing and protruding from a lower surface of the housing;
a horizontal rotating bracket, wherein the horizontal rotating bracket rotatably mounted within the housing about the first central axis, so as to horizontally rotate relative to the spherical transparent cover about the first central axis;
a lens assembly having a second optical axis direction, wherein the lens assembly rotatably is mounted on the horizontal rotating bracket about a second central axis extending in a horizontal direction, so as to tilt-adjust the second optical axis direction;
wherein the lens assembly includes:
   a lens housing axially extending along the second optical axis direction;
   a lens mounted within the lens housing with a front end of the lens exposed through a lens hole at a front end of the lens housing;
   a supplementary light mounted on the lens housing, wherein an emitted light of the supplementary light is configured to illuminate an image area of the lens;
   a light shielding assembly, wherein the light shielding assembly is mounted on the lens housing and located between the lens and the supplementary light in a radial direction of the lens housing, wherein the light shielding assembly includes a driving component, wherein the driving component is configured to output a driving force along the second optical axis direction, so as to change a gap between a front end of the light shielding assembly and the spherical transparent cover.

The spherical camera provided by the embodiment of the present application includes the housing, the spherical transparent cover, the horizontal rotating bracket, and the lens assembly. The lens assembly includes the lens housing, the lens, the supplementary light, and the light shielding assembly. The lens assembly and the horizontal rotating bracket used for driving the lens assembly to rotate are entirely mounted within the spherical transparent cover, and include the supplementary light for the lens assembly and the light shielding assembly isolated between the supplementary light and the lens, which can not only meet the angle adjustment requirements of the camera product, but also improve the image quality of the spherical camera.

### Brief Description of the Drawings

The accompanying drawings described here are used to provide a further understanding of the present application and constitute a part of the present application. The illustrative embodiments of the present application and their descriptions are used to explain the present application and do not constitute an improper limitation on the present application.
Fig. 1a is a schematic structure diagram of a spherical camera of the present application from a first angle.
Fig. 1b is a schematic structure diagram of the spherical camera of Fig. 1a from a second angle (with an upper housing, a lower housing, and a spherical transparent cover not shown).
Fig. 1c is a schematic structure diagram of the spherical camera of Fig. 1a from a third angle (with the upper housing, the lower housing, and the spherical transparent cover not shown).
Fig. 1d is a schematic structure diagram of the spherical camera of Fig. 1a from a fourth angle (with the lower housing and the spherical transparent cover not shown).
Fig. 1e is a schematic structure diagram of the spherical camera of Fig. 1a from a fifth angle (with the lower housing, a lower half of the lens housing, and the spherical transparent cover not shown).
Fig. 2 is an exploded schematic diagram of the spherical camera of the present application.
Fig. 3a is a schematic diagram of a first light shielding position of a light shielding assembly in the spherical camera of the present application.
Fig. 3b is a schematic diagram of a second light shielding position of the light shielding assembly in the spherical camera of the present application.
Fig. 3c is a partially enlarged schematic view of portion A in Fig. 3a.
Fig. 3d is a partially enlarged schematic view of portion B in Fig. 3b.
Fig. 3e is a cross-sectional view of the spherical camera of the present application.
Fig. 3f is a partially enlarged schematic view of portion C in Fig. 3e.
Fig. 3g is a partially enlarged schematic view of portion D in Fig. 3e.
Fig. 4 is a partially exploded view of a first embodiment of the spherical camera of the present application.
Fig. 5 is a partially exploded view of the light shielding assembly of the present application in Fig. 4.
Fig. 6 is a partially exploded view of a second embodiment of the spherical camera of the present application.

Reference numerals:
housing 10; upper housing 10a; lower housing 10b; spherical transparent cover 20; horizontal rotating bracket 30; lens assembly 40; lens housing 41; supplementary light slot 411; lens 42; supplementary light 43; light shielding assembly 44; driving component 441; light shielding ring 442; light shielding bracket 443; fixing arm 444; fixing ring 445; main board assembly 50; horizontal drive motor 60; first gear 61; second gear 62; motor lead screw 63; tilt drive motor 70; third gear 71; fourth gear 72; lens rotation drive motor 80; fifth gear 81; sixth gear 82; first central axis LP; second central axis LT; second optical axis direction LR.

### Detailed Description

In order to make the objective, technical solutions, and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

In order to have a clearer understanding of the technical features, objectives, and effects of the present invention, the specific embodiments of the present application are now described with reference to the accompanying drawings, in which the same reference numerals denote the same parts.

In this document, "schematic" means "serving as an example, instance, or illustration", and any illustration or embodiment described herein as "schematic" should not be construed as a more preferred or advantageous technical solution.

To keep the drawings concise, only parts related to the present application are schematically shown in each drawing, and they do not represent the actual structure of the product. In addition, to keep the drawings concise and easy to understand, in some drawings, only one of the components having the same structure or function is schematically shown, or only one of them is labeled.

In this document, terms such as "upper", "lower", "front", "rear", "left", "right", are only used to indicate relative positional relationships between relevant parts, and do not limit the absolute positions of these relevant parts.

In this document, terms such as "first", "second" and the like are only used to distinguish from each other, and do not indicate importance, order, or prerequisites for mutual existence.

In this document, terms such as "equal", "same" are not strictly mathematical and/or geometric limitations, but also include tolerances that can be understood by those skilled in the art and permissible in manufacturing or use. Unless otherwise stated, numerical ranges in this document include not only the entire range between their two endpoints, but also several sub-ranges contained therein.

Various example embodiments will now be described more fully with reference to the accompanying drawings. In order to solve the problems in the prior art, the present application provides a spherical camera, wherein a lens assembly and a rotation bracket for driving the lens assembly to rotate are entirely disposed within a spherical transparent cover, and include a supplementary light for the lens assembly and a light shielding assembly isolated between the supplementary light and the lens, which can not only meet the angle adjustment requirements of the camera product, but also improve the image quality of the spherical camera.

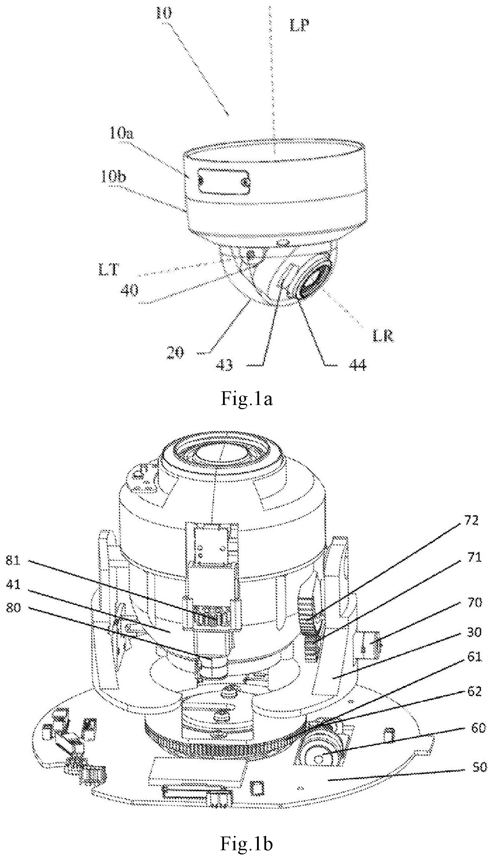

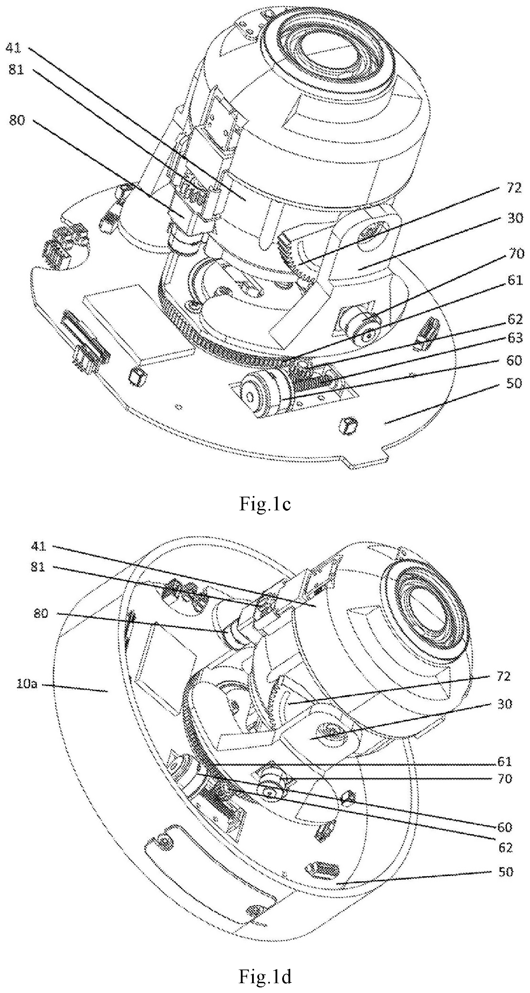

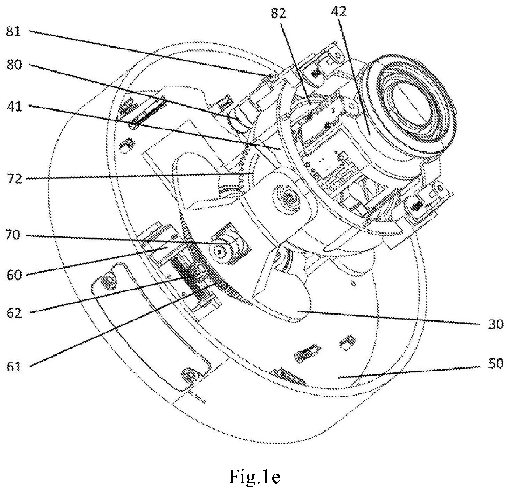

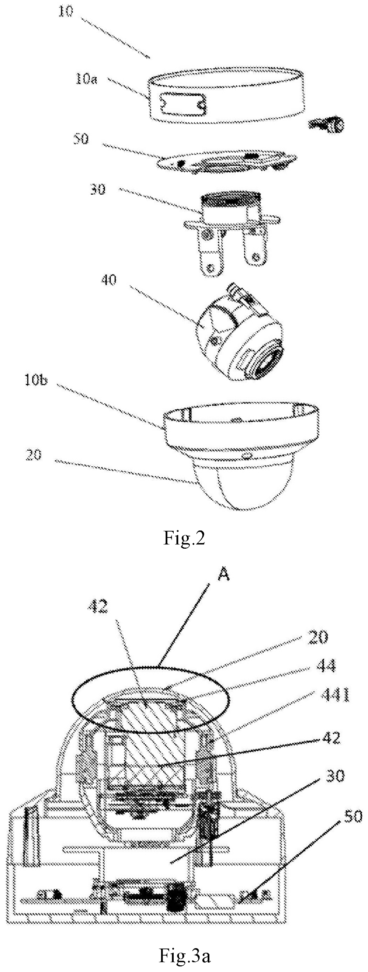

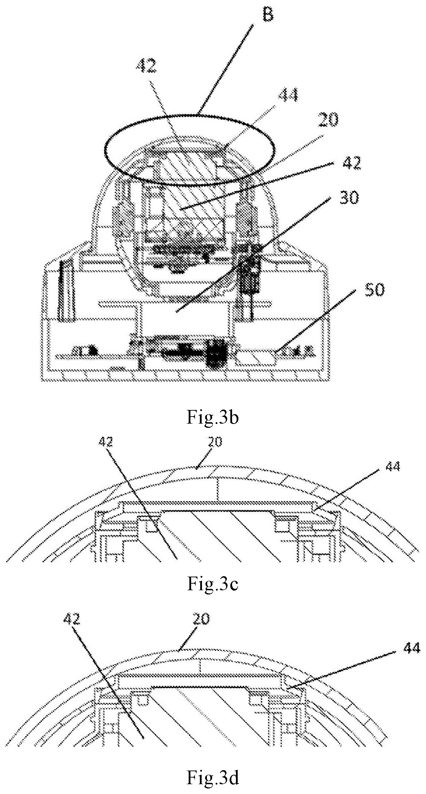

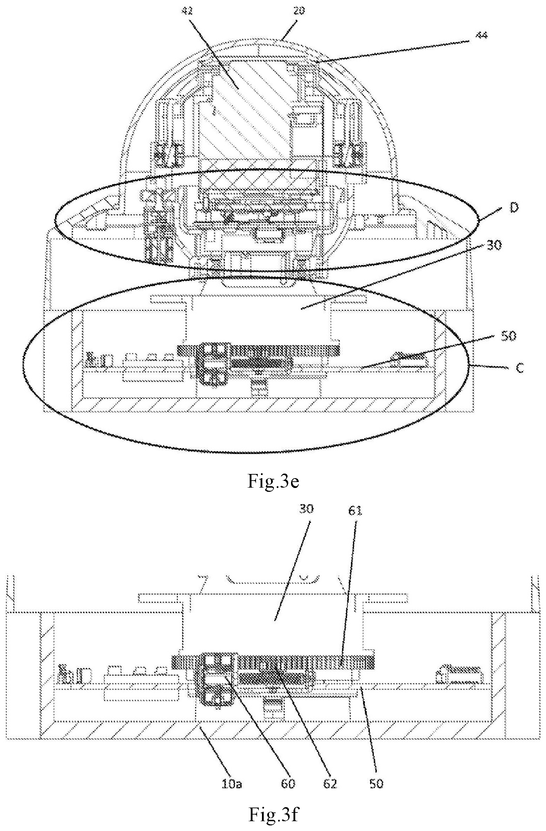

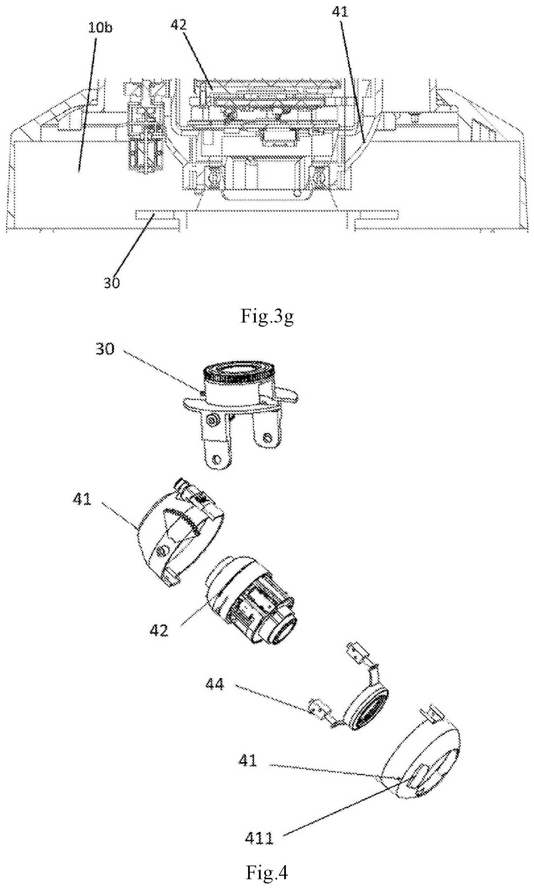

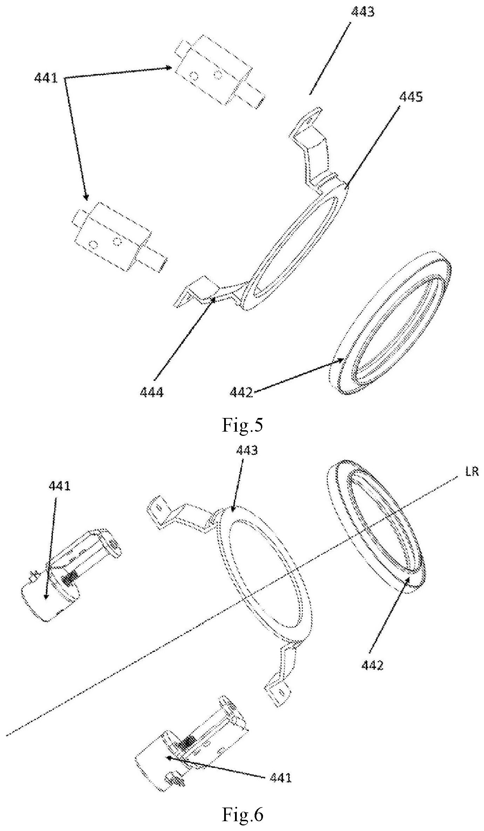

As shown in Figs. 1a to 5, Fig. 1a is a schematic structure diagram of the spherical camera of the present application from a first angle; Fig. 1b is a schematic structure diagram of the spherical camera of Fig. 1a from a second angle (with an upper housing and a spherical transparent cover not shown); Fig. 1c is a schematic structure diagram of the spherical camera of Fig. 1a from a third angle (with the upper housing, a lower housing, and the spherical transparent cover not shown); Fig. 1d is a schematic structure diagram of the spherical camera of Fig. 1a from a fourth angle (with the lower housing and the spherical transparent cover not shown); Fig. 1e is a schematic structure diagram of the spherical camera of Fig. 1a from a fifth angle (with the lower housing, a lower half of the lens housing, and the spherical transparent cover not shown); Fig. 2 is an exploded schematic diagram of the spherical camera of the present application; Fig. 3a is a schematic diagram of a first light shielding position of a light shielding assembly in the spherical camera of the present application; Fig. 3b is a schematic diagram of a second light shielding position of the light shielding assembly in the spherical camera of the present application; Fig. 3c is a partially enlarged schematic view of portion A in Fig. 3a; Fig. 3d is a partially enlarged schematic view of portion B in Fig. 3b; Fig. 3e is a cross-sectional view of the spherical camera of the present application; Fig. 3f is an enlarged partial view of portion C in Fig. 3e; Fig. 3g is an enlarged partial view of portion D in Fig. 3e; Fig. 4 is a partially exploded view of the first embodiment of the spherical camera of the present application; Fig. 5 is a partially exploded view of the light shielding assembly of the first embodiment of the spherical camera according to the present application in Fig. 4.

One embodiment of the present application provides a spherical camera, including a housing 10, a spherical transparent cover 20, a horizontal rotating bracket 30, and a lens assembly 40; the housing 10 defines a first central axis LP extending in a vertical direction; the spherical transparent cover 20 is fixed to the housing 10 and protrudes from a lower surface of the housing 10; the horizontal rotating bracket 30 is rotatably mounted within the housing 10 about the first central axis LP, so as to horizontally rotate relative to the spherical transparent cover 20 about the first central axis LP; the lens assembly 40 has a second optical axis direction LR, and the lens assembly 40 is rotatably mounted on the horizontal rotating bracket 30 about a second central axis LT extending in a horizontal direction, so as to tilt-adjust the second optical axis direction LR.

The lens assembly 40 includes a lens housing 41, a lens 42, a supplementary light 43, and a light shielding assembly 44; the lens housing 41 axially extends along the second optical axis direction LR; the lens 42 is mounted within the lens housing 41 with a front end of the lens is exposed through a lens hole at a front end of the lens housing 41; the supplementary light 43 is mounted on the lens housing 41, an emitted light of the supplementary light 43 is configured to illuminate an image area of the lens 42; the light shielding assembly 44 is mounted on the lens housing 41 and is located between the lens 42 and the supplementary light 43 in a radial direction of the lens housing 41, the light shielding assembly 44 includes a driving component 441, the driving component 441 is configured to output a driving force along the second optical axis direction LR, so as to change a gap between a front end of the light shielding assembly 44 and the spherical transparent cover 20.

In the spherical camera provided by the embodiment of the present application, the spherical camera includes the housing, the spherical transparent cover, the horizontal rotating bracket, and the lens assembly. The lens assembly includes the lens housing, the lens, the supplementary light, and the light shielding assembly. The lens assembly and the horizontal rotating bracket used for driving the lens assembly to rotate are entirely disposed within the spherical transparent cover, and include the supplementary light for the lens assembly and the light shielding assembly isolated between the supplementary light and the lens, which can not only meet the angle adjustment requirements of the camera product, but also improve the image quality of the spherical camera.

In this embodiment, as shown in Figs. 1a, 3a, and 3b, the lens assembly 40 is completely disposed inside a camera body assembly formed by the combination of the housing 10 and the spherical transparent cover 20, and the camera body assembly completely encloses the lens assembly 40. As shown in Fig. 2, the housing 10 includes an upper housing 10a and a lower housing 10b, the housing 10 defines the first central axis LP extending in the vertical direction, a bottom surface of the lower housing 10b has a through hole, the spherical transparent cover 20 is fixed to the through hole and protrudes from the lower surface of the lower housing 10b, and the spherical transparent cover 20 together with the housing 10 forms a closed cavity for mounting the lens assembly 40.

As shown in Fig. 2, the spherical camera further includes a main board assembly 50, which is mounted within the housing 10, wherein the spherical transparent cover 20 is made of a transparent material, and the lens assembly 40 captures images through the spherical transparent cover 20. The housing 10 is generally made of an opaque material, and the main board assembly 50, brackets and motors for supporting and driving the lens assembly 40 to rotate, etc., are mounted within the housing 10.

As shown in Fig. 1a, the optical axis direction of the lens assembly 40 is the second optical axis direction LR, and the second optical axis direction LR can be achieved by rotating the lens assembly 40 about three axes, namely a pan direction (P direction), a tilt direction (T direction), and a roll direction (R direction). Three-axis rotation of the lens assembly 40 enables the spherical camera to capture images at different angles.

The housing 10 is mounted on a carrier, which may be a ceiling, a wall, a bracket, a desktop, a robot, or the like.

Usually, it is mounted on a substantially horizontal position (e.g., a ceiling) so that the first central axis LP extends in the vertical direction. Then, the P-direction rotation corresponds to the horizontal rotation of the lens assembly 40, i.e., panning; the T-direction rotation corresponds to the tilt rotation of the lens assembly 40; and the R-direction rotation corresponds to the rotation of the lens assembly 40 about its second optical axis direction LR, i.e., rolling.

In this example, as shown in Figs. 3a and 3b, the lens assembly 40 is mounted within the housing 10 via the horizontal rotating bracket 30. Specifically, as shown in Fig. 3e, the horizontal rotating bracket 30 is mounted on an inner wall of the upper housing 10a and is rotatable about the first central axis LP, so as to drive the lens assembly 40 to horizontally rotate relative to the housing 10 and the spherical transparent cover 20 about the first central axis LP.

Specifically, as shown in Fig. 2, the horizontal rotating bracket 30 may have a pair of support arms for supporting the lens assembly 40, so as to form a U-shaped bracket with a downward opening. The pair of support arms extend along the direction of the first central axis LP, and the lens assembly 40 is rotatably mounted between the pair of support arms. Each support arm may have a rotation hole at a bottom end thereof, and a pair of rotation holes define the second central axis LT extending in the horizontal direction. The lens assembly 40 is mounted in the rotation holes, so as to tilt-rotate relative to the horizontal rotating bracket 30 about the second central axis LT, thereby tilt-rotating relative to the spherical transparent cover 20. The lens assembly 40 itself may have a degree of freedom for rotation about the second optical axis LR. Thus, regardless of the carrier on which the housing 10 is mounted at the first central axis LP, the relative relationships of the P-direction, T-direction, and R-direction of the lens assembly 40 remain unchanged, but its orientation relative to the ground changes.

As shown in Figs. 1b to 4, the horizontal rotating bracket 30 is provided with rotation holes, rotation protrusions, and grooves. Two sides of the outer housing of the lens assembly 40 are provided with protruding shafts. The protruding shafts extend horizontally along the second central axis LT and extend into the rotation holes to rotate therewith. The protruding shafts define the second central axis LT. The lens assembly 40 is rotatably connected to the horizontal rotating bracket 30 about the second central axis LT. The second central axis LT is perpendicular to the first central axis LP. When the lens assembly 40 rotates about the second central axis LT, it drives the lens assembly 40 to perform T-direction rotation about the second central axis LT, thereby achieving T-direction rotation of the lens assembly 40.

As shown in Fig. 1a, the lens assembly 40 includes a supplementary light 43 mounted on the lens housing 41. The supplementary light 43 is configured to provide a light source for the image area of the lens, so as to supply supplementary light to the lens assembly 40 under insufficient ambient light conditions. The emitted light of the supplementary light 43 may be reflected by the spherical transparent cover 20 and enter the lens 42, causing the captured image to appear whitish. In this embodiment, the light shielding assembly 44 mounted between the lens 42 and the supplementary light 43 is provided, and is isolated between the lens 42 and the supplementary light 43 in the radial direction of the lens housing 41, thereby blocking the emitted light of the supplementary light 43 from directly entering the lens 42. Furthermore, the light shielding assembly 44 can change the gap relative to the spherical transparent cover 20 along the second optical axis direction LR under the driving of the driving component 441, thereby improving image quality by blocking reflected light of the emitted light of the supplementary light 43 on the spherical transparent cover 20 from entering the lens 42.

Specifically, the light shielding assembly 44 has a first light shielding position located within the lens housing 41 and with its front end flush with the lens hole as shown in Fig. 3a,, and
a second light shielding position, where the front end protrudes from the lens hole beyond the lens housing 41 and abuts an inner surface of the spherical transparent cover 20 as shown in Fig. 3b.

It can be understood that, as shown in Fig. 3a, since the lens assembly 40 can be adjusted in rotation in the P-direction, T-direction, and R-direction within the spherical transparent cover 20, there must be a gap between the front end of the lens assembly 40, i.e., the front end of the lens housing 41, and the spherical transparent cover 20. Therefore, without the light shielding assembly 44, reflected light from the supplementary light on the inner surface of the spherical transparent cover 20 would inevitably have the possibility of entering the lens 42.

As shown in Fig. 3b, when the light shielding assembly 44 abuts the inner surface of the spherical transparent cover 20 as shown in Fig. 3b, the light shielding assembly 44 is located between the supplementary light 43 and the lens 42 in the radial direction, and also completely blocks the optical path between the supplementary light 43 and the lens 42, effectively preventing the light emitted by the supplementary light 43 from entering the lens 42.

When the lens assembly 40 is adjusted in rotation in the P-direction, T-direction, and R-direction within the spherical transparent cover 20, the abutment of the light shielding assembly 44 against the inner surface of the spherical transparent cover 20 would cause friction on the inner surface of the spherical transparent cover 20. Therefore, the light shielding assembly 44 also has the first light shielding position where it is disengaged from the spherical transparent cover 20, so that there is a gap between the front end of the light shielding assembly 44 and the inner surface of the spherical transparent cover 20, so as not to affect the rotational adjustment of the lens assembly 40 within the spherical transparent cover 20.

Optionally, since the supplementary light 43 is not turned on during the rotational adjustment of the lens assembly 40, it is not necessary for the light shielding assembly 44 to block the reflected light of the supplementary light 43 at this time.

As shown in Fig. 5, in a specific example, the light shielding assembly 44 includes:
a light shielding ring 442, the light shielding ring 442 being driven by the driving component 441 to move along the second optical axis direction LR.

Wherein, the diameter of the lens 42 is smaller than the diameter of the lens hole, and the light shielding ring 442 is formed as an annular ring coaxial with the lens 42, and the light shielding ring 442 is mounted in a gap between the lens 42 and the lens hole.

The light shielding ring 442 forms a clearance fit with both the lens hole and the lens 42, and the movement of the light shielding ring 442 along the second optical axis direction LR does not interfere with the lens hole or the lens 42.

As shown in Fig. 5, the light shielding assembly 44 includes:
a light shielding bracket 443, the light shielding bracket 443 including a pair of fixing arms 444 extending along the second optical axis direction LR, and a fixing ring 445 supported by the fixing arms 444.

Wherein, the fixing arms 444 are symmetrically located outside the lens 42, the fixing ring 445 is supported at front ends of the fixing arms 444, and the driving component 441 outputs a driving force along the second optical axis direction LR via rear ends of the fixing arms 444.

The light shielding ring 442 is mounted on a front surface of the fixing ring 445.

The light shielding ring 442 is made of a soft, elastically deformable material, such as a silicone material. The front end surface of the light shielding ring 442 may be formed as an arc-shaped edge or a chamfered edge for forming a tight fit with the arc-shaped inner surface of the spherical transparent cover 20.

To ensure light shielding quality, the thickness of the light shielding ring 442, or the sum of the thicknesses of the light shielding ring 442 and the fixing ring 445, is greater than or equal to the gap between the lens 42 and the spherical transparent cover 20.

That is, the distance between the first light shielding position and the second light shielding position should be less than or equal to the thickness of the light shielding ring 442, or less than or equal to the sum of the thicknesses of the light shielding ring 442 and the fixing ring 445, wherein the thickness direction is the second optical axis direction LR. In this case, when the light shielding assembly 44 moves to the second light shielding position, the light shielding assembly 44 still completely shields between the lens 42 and the supplementary light 43 in the radial direction, so as to prevent the light of the supplementary light 43 from directly entering the lens 42.

Further, as shown in Fig. 4, the lens housing 41 includes:
a supplementary light slot 411, the supplementary light slot 411 being located outside the lens hole, the supplementary light slot 411 having a supplementary light slot bottom surface located rearward of the lens hole in the second optical axis direction LR, and a supplementary light slot side wall extending along the second optical axis direction LR between the supplementary light slot bottom surface 441 and the light shielding assembly 44.

Wherein, the supplementary light 43 is mounted on the supplementary light slot bottom surface.

Specifically, as shown in Fig. 1b, the spherical camera of this embodiment includes:
a lens driving assembly, the lens driving assembly including a horizontal drive motor 60 for driving the horizontal rotating bracket 30 to horizontally rotate relative to the spherical transparent cover 20 about the first central axis LP, and a tilt drive motor 70 for driving the lens assembly 40 to tilt-rotate relative to the horizontal rotating bracket 30 about the second central axis LT.

Specifically, a rotation protrusion of the horizontal rotating bracket 30 is provided with a first gear 61, the horizontal drive motor 60 is fixedly connected to an inner bottom side of the upper housing 10a, an output shaft of the horizontal drive motor 60 is connected with a second gear 62, and the second gear 62 meshes with the first gear 61, so that the horizontal drive motor 60 drives the horizontal rotating bracket 30 to horizontally rotate relative to the spherical transparent cover 20 about the first central axis LP via the first gear 61 and the second gear 62.

As shown in Fig. 1c, the rotation protrusion of the horizontal rotating bracket 30 is provided with the first gear 61, the horizontal drive motor 60 is fixedly connected to the inner bottom side of the upper housing 10a, an output shaft of the horizontal drive motor 60 is connected to a motor lead screw 63, the horizontal drive motor 60 drives the motor lead screw 63 to rotate, the motor lead screw 63 is connected to the second gear 62, the motor lead screw 63 causes the second gear 62 to rotate, and the second gear 62 meshes with the first gear 61, so that the horizontal drive motor 60 drives the horizontal rotating bracket 30 to horizontally rotate relative to the spherical transparent cover 20 about the first central axis LP via the motor lead screw 63, the first gear 61, and the second gear 62.

As shown in Fig. 1b, the tilt drive motor 70 is fixedly connected to the horizontal rotating bracket 30, an output shaft of the tilt drive motor is connected with a third gear 71, a fourth gear 72 is provided on the lens housing 41 at a position corresponding to the third gear 71, and the third gear 71 meshes with the fourth gear 72, so that the tilt drive motor 70 drives the lens assembly 40 to tilt-rotate relative to the horizontal rotating bracket 30 about the second central axis LT via the third gear 71 and the fourth gear 72.

As shown in Fig. 1e, the lens driving assembly further includes a lens rotation drive motor 80 for driving the lens 42 to rotate relative to the lens housing 41 about the second optical axis direction LR.

Specifically, the lens rotation drive motor 80 is fixedly connected to the lens housing 41, an output shaft of the lens rotation drive motor 80 is connected with a fifth gear 81, a sixth gear 82 is provided on the lens 42 at a position corresponding to the fifth gear 81, and the fifth gear 81 meshes with the sixth gear 82, so that the lens rotation drive motor 80 drives the lens 42 to rotate relative to the lens housing 41 about the second optical axis direction LR via the fifth gear 81 and the sixth gear 82.

Wherein, the lens driving assembly and the driving component 441 are selectively activated.

As described above, in order to avoid the light shielding assembly 44 rubbing against the inner surface of the spherical transparent cover 20 when the lens assembly 40 is rotated and adjusted within the spherical transparent cover 20, the lens driving assembly and the driving component 441 are selectively activated.

That is, when the driving component 441 is activated, the light shielding assembly 44 abuts against the inner surface of the spherical transparent cover 20. If the lens driving assembly is activated at this time, the lens assembly 40 will drive the light shielding assembly 44 to rotate. Since the light shielding assembly 44 is in abutment with the inner surface of the spherical transparent cover 20, the light shielding assembly 44 will cause friction on the inner surface of the spherical transparent cover 20. Therefore, the lens driving assembly and the driving component 441 need to be activated selectively and cannot be activated simultaneously.

As shown in Figs. 3c and 3d, the driving component 441 can drive the light shielding assembly 44 to switch between the first light shielding position and the second light shielding position.

Wherein, as shown in Fig. 3c, the deactivation of the driving component 441 corresponds to the first light shielding position, and as shown in Fig. 3d, the activation of the driving component 441 corresponds to the second light shielding position.

The driving component 441 is configured to drive the light shielding assembly 44 to switch between the first light shielding position and the second light shielding position. Then, the activation or deactivation of the driving component 441 necessarily corresponds to the position of the light shielding assembly 44. Specifically, when the driving component 441 is deactivated, the light shielding assembly 44 is in the first light shielding position, and there is a gap between the front end of the light shielding ring and the inner surface of the spherical transparent cover 20. At this time, the lens driving assembly can be activated, and the lens assembly 40 can be rotationally adjusted, and the light shielding assembly 44 will not contact the inner surface of the spherical transparent cover 20.

When the driving component 441 is activated, the light shielding assembly 44 is in the second light shielding position, and the front end of the light shielding ring abuts against the inner surface of the spherical transparent cover 20. At this time, the lens driving assembly cannot be activated, and the lens assembly 40 cannot be rotationally adjusted. At the same time, the supplementary light 43 can be turned on, and the light shielding assembly 44 is configured to block reflected light of the supplementary light 43 on the inner surface of the spherical transparent cover 20 from entering the lens 42.

When the lens assembly 40 performs rotational adjustment in any direction, the light shielding assembly 44 must not be able to switch between light shielding positions, or when the light shielding assembly 44 switches between the light shielding positions, the lens assembly 40 must not be able to perform rotational adjustment. The selective activation of the lens driving assembly and the driving component 441 means that when any one or more of the lens driving assemblies are activated, the driving component 441 will not be in an activated state. As shown in Fig. 5, optionally, the driving component 441 is a solenoid valve, and the solenoid valve is configured to drive the light shielding assembly 44 to switch between the first light shielding position and the second light shielding position.

Wherein, the deactivation of the driving component 441 corresponds to the first light shielding position, and the activation of the driving component 441 corresponds to the second light shielding position.

The solenoid valve is configured to drive the light shielding assembly 44 to switch between the first light shielding position and the second light shielding position. Then, the activation or deactivation of the solenoid valve necessarily corresponds to the position of the light shielding assembly 44. Specifically, when the solenoid valve is deactivated, the light shielding assembly 44 is in the first light shielding position, and there is a gap between the front end of the light shielding ring and the inner surface of the spherical transparent cover 20. At this time, the lens driving assembly can be activated, and the lens assembly 40 can be rotationally adjusted, and the light shielding assembly 44 will not contact the inner surface of the spherical transparent cover 20. When the solenoid valve is activated, the light shielding assembly 44 is in the second light shielding position, and the front end of the light shielding ring abuts against the inner surface of the spherical transparent cover 20. At this time, the lens driving assembly cannot be activated, and the lens assembly 40 cannot be rotationally adjusted. At the same time, the supplementary light 43 can be turned on, and the light shielding assembly 44 is configured to block reflected light of the supplementary light 43 on the inner surface of the spherical transparent cover 20 from entering the lens 42.

From the above technical solutions, it can be known that when the light shielding assembly 44 in the lens assembly 40 does not require angle adjustment during normal image capturing, the light shielding assembly 44, especially the light shielding ring, is in contact with the spherical transparent cover 20. When the lens 42 needs to perform T-direction and P-direction adjustments, the light shielding assembly 44 moves to the first light shielding position along the second optical axis direction LR, and the light shielding assembly 44 does not contact the spherical transparent cover 20, forming a gap, so as to prevent the light shielding ring from scratching the spherical transparent cover during P-direction or T-direction movement, which would cause image problems.

As shown in Figs. 1a to 3f and Fig. 6, the present application also provides a spherical camera, including a housing 10, a spherical transparent cover 20, a horizontal rotating bracket 30, and a lens assembly 40;
the housing 10 defines a first central axis LP extending in a vertical direction;
the spherical transparent cover 20 is fixed to the housing 10 and protrudes from a lower surface of the housing 10;
the horizontal rotating bracket 30 is rotatably mounted within the housing 10, so as to horizontally rotate relative to the spherical transparent cover 20 about the first central axis LP;
the lens assembly 40 has a second optical axis direction LR, and the lens assembly 40 is rotatably mounted on the horizontal rotating bracket 30 about a second central axis LT extending in a horizontal direction, so as to tilt-adjust the second optical axis direction LR;
the lens assembly 40 includes a lens housing 41, a lens 42, a supplementary light 43, and a light shielding assembly 44:
   the lens housing 41 axially extends along the second optical axis direction LR;
   the lens 42 is mounted within the lens housing 41 with a front end of the lens is exposed through a lens hole at a front end of the lens housing 41;
   the supplementary light 43 is mounted on the lens housing 41, an emitted light of the supplementary light 43 being configured to illuminate an image area of the lens 42;
   the light shielding assembly 44 is mounted on the lens housing 41 and located between the lens 42 and the supplementary light 43 in a radial direction of the lens housing 41, the light shielding assembly 44 including a driving component 441, the driving component 441 is configured to output a driving force along the second optical axis direction LR, so as to change a gap between a front end of the light shielding assembly 44 and the spherical transparent cover 20.

Wherein, the driving component 441 is a linear motor, and the linear motor is configured to drive the light shielding assembly 44 to move between the first light shielding position and the second light shielding position.

The activated state of the lens driving assembly does not correspond to the second light shielding position.

The linear motor is configured to drive the light shielding assembly 44 to move between the first light shielding position and the second light shielding position. Then, the activation or deactivation of the linear motor necessarily corresponds to the motion state of the light shielding assembly 44. Specifically, when the linear motor is deactivated, the light shielding assembly 44 is in the first light shielding position or the second light shielding position. When the linear motor is activated, the light shielding assembly 44 is in any position between the first light shielding position and the second light shielding position, and is in a moving state.

When the light shielding assembly 44 is in the first light shielding position, there is a gap between the front end of the light shielding ring and the inner surface of the spherical transparent cover 20. At this time, the lens driving assembly can be activated, and the lens assembly 40 can be rotationally adjusted, and the light shielding assembly 44 will not contact the inner surface of the spherical transparent cover 20. When the light shielding assembly 44 is in the second light shielding position, the front end of the light shielding ring abuts against the inner surface of the spherical transparent cover 20. At this time, the lens driving assembly cannot be activated, and the lens assembly 40 cannot be rotationally adjusted. At the same time, the supplementary light 43 can be turned on, and the light shielding assembly 44 is configured to block reflected light of the supplementary light 43 on the inner surface of the spherical transparent cover 20 from entering the lens 42.

Wherein, the linear motor may be implemented as a lead screw motor.

From the above technical solutions, it can be known that when the light shielding assembly 44 in the lens assembly 40 does not require angle adjustment during normal image capturing, the light shielding assembly 44, especially the light shielding ring, is in contact with the spherical transparent cover 20. When the lens 42 needs to perform T-direction and P-direction adjustments, the light shielding assembly 44 moves to the first light shielding position along the second optical axis direction LR, and the light shielding assembly 44 does not contact the spherical transparent cover 20, forming a gap, so as to prevent the light shielding ring from scratching the spherical transparent cover during P-direction or T-direction movement, which would cause image problems.

The series of detailed descriptions listed above are merely specific descriptions of feasible embodiments of the present application, and are not intended to limit the protection scope of the present application. Any equivalent implementations or modifications that do not depart from the technical spirit of the present application, such as combinations, divisions, or repetitions of features, shall be included within the protection scope of the present application.

## Claims

1. A spherical camera, comprising:
a housing defining a first central axis extending in a vertical direction;
a spherical transparent cover fixed to the housing and protruding from a lower surface of the housing;
a horizontal rotating bracket, wherein the horizontal rotating bracket is rotatably mounted within the housing about the first central axis, so as to horizontally rotate relative to the spherical transparent cover about the first central axis;
a lens assembly having a second optical axis direction, wherein the lens assembly is rotatably mounted on the horizontal rotating bracket about a second central axis extending in a horizontal direction, so as to tilt-adjust the second optical axis direction;
wherein the lens assembly comprises:
a lens housing axially extending along the second optical axis direction;
a lens mounted within the lens housing with a front end of the lens exposed through a lens hole at a front end of the lens housing;
a supplementary light mounted on the lens housing, wherein an emitted light of the supplementary light is configured to illuminate an image area of the lens;
a light shielding assembly, wherein the light shielding assembly is mounted on the lens housing and located between the lens and the supplementary light in a radial direction of the lens housing, wherein the light shielding assembly comprises a driving component,
wherein the driving component is configured to output a driving force along the second optical axis direction, so as to change a gap between a front end of the light shielding assembly and the spherical transparent cover.

2. The spherical camera according to claim 1, wherein the light shielding assembly has a first light shielding position and a second light shielding position,
wherein in the first light shielding position, the light shielding assembly is located within the lens housing and the front end of the light shielding assembly is flush with the lens hole, and
in the second light shielding position, the front end of the light shielding assembly protrudes from the lens hole beyond the lens housing and abuts against an inner surface of the spherical transparent cover.

3. The spherical camera according to claim 2, wherein the light shielding assembly comprises a light shielding ring, wherein the light shielding ring is driven by the driving component to move along the second optical axis direction,
wherein a diameter of the lens is smaller than a diameter of the lens hole, and the light shielding ring is formed as an annular ring coaxial with the lens, and the light shielding ring is mounted in a gap between the lens and the lens hole.

4. The spherical camera according to claim 3, wherein the light shielding assembly comprises a light shielding bracket, wherein the light shielding bracket comprises a pair of fixing arms extending along the second optical axis direction, and a fixing ring supported by the fixing arms;
wherein the pair of fixing arms are symmetrically located outside the lens, the fixing ring is supported at front ends of the fixing arms, and the driving component outputs the driving force along the second optical axis direction via rear ends of the fixing arms;
and the light shielding ring is mounted on a front surface of the fixing ring.

5. The spherical camera according to claim 4, wherein a thickness of the light shielding ring, or a sum of thicknesses of the light shielding ring and the fixing ring, is greater than or equal to a gap between the lens and the spherical transparent cover.

6. The spherical camera according to claim 1, wherein the lens housing comprises a supplementary light slot located outside the lens hole, wherein the supplementary light slot has a supplementary light slot bottom surface located rearward of the lens hole in the second optical axis direction, and a supplementary light slot side wall extending along the second optical axis direction between the supplementary light slot bottom surface and the light shielding assembly;
wherein the supplementary light is mounted on the supplementary light slot bottom surface.

7. The spherical camera according to claim 2, wherein the spherical camera comprises a lens driving assembly, wherein the lens driving assembly comprises a horizontal drive motor for driving the horizontal rotating bracket to horizontally rotate relative to the spherical transparent cover about the first central axis, and a tilt drive motor for driving the lens assembly to tilt-rotate relative to the horizontal rotating bracket about the second central axis;
wherein the lens driving assembly and the driving component are selectively activated.

8. The spherical camera according to claim 7, wherein the driving component is a solenoid valve, and the solenoid valve is configured to drive the light shielding assembly to switch between the first light shielding position and the second light shielding position;
wherein deactivation of the driving component corresponds to the first light shielding position, and activation of the driving component corresponds to the second light shielding position.

9. The spherical camera according to claim 7, wherein, the driving component is a linear motor, and the linear motor is configured to drive the light shielding assembly to move between the first light shielding position and the second light shielding position.

10. The spherical camera according to claim 9, wherein, activation of the lens driving assembly does not correspond to the second light shielding position.
